# EUROPÄISCHE PATENTSCHRIFT

(11) **EP 3 785 088 B1**
(45) Veröffentlichungstag und Bekanntmachung des Hinweises auf die Patenterteilung: **04.06.2025**
(21) Anmeldenummer: 19720535.4
(22) Anmeldetag: 25.04.2019
(51) Int. Cl.: G05B 19/18, G05B 19/404, G05B 19/4093, B23F 23/00, B23F 23/12, B23Q 39/04

(54) **VERFAHREN UND SYSTEM ZUM BEARBEITEN VON AN WERKSTÜCKEN VORGESEHENEN VERZAHNUNGEN**
METHOD AND SYSTEM FOR MACHINING TOOTHINGS PROVIDED ON WORKPIECES
PROCÉDÉ ET SYSTÈME D'USINAGE DE DENTURES PRÉVUES SUR DES PIÈCES

(30) Priorität: 27.04.2018 DE 102018003482
(43) Veröffentlichungstag der Anmeldung: 03.03.2021
(73) Patentinhaber: GLEASON-PFAUTER MASCHINENFABRIK GMBH, 71636 Ludwigsburg (DE)
(72) Erfinder: HOFER, Philip, 3216 Ried bei Kerzers (CH); BROGNI, Johannes, 3293 Dotzigen (CH); WEIGOLD, Harald, 88276 Berg (DE); LEICHT, Bernhard, 96489 Niederfüllbach (DE)
(74) Vertreter: Leinweber & Zimmermann
(86) Internationale Anmeldenummer: PCT/EP2019/060688
(87) Internationale Veröffentlichungsnummer: WO 2019/207077

(56) Entgegenhaltungen:
- EP-A1- 2 394 770
- EP-A1- 2 394 770
- DE-A1- 102007 019 558
- DE-A1- 102007 019 558
- DE-A1- 102015 014 313
- DE-A1- 102015 014 313
- DE-A1- 3 720 157
- DE-A1- 3 720 157

## Beschreibung

Die Erfindung betrifft ein Verfahren zum Bearbeiten von an Werkstücken vorgesehenen Verzahnungen, bei dem mehrere Werkstücke wenigstens einer Bearbeitungsstation mit wenigstens zwei Bearbeitungen und/oder wenigstens zwei Bearbeitungsstationen mit je wenigstens einer Bearbeitung zugeführt werden und dort die Verzahnungsbearbeitung unter einem Bearbeitungseingriff eines Verzahnungswerkzeugs mit der Werkstückverzahnung als wenigstens eine dieser Bearbeitungen sowie die wenigstens eine weitere Bearbeitung in Maschinenechtzeit ausgeführt werden.

Derartige Verfahren sind weit verbreitet und dienen der Herstellung von Verzahnungen auf dem Gebiet der Verzahnungstechnologie, sowie deren weiterer Bearbeitung. Beispiele für Verzahnungserzeugungen sind das Wälzfräsen, Wälzschälen oder Wälzstoßen, jedenfalls die am meisten angewandten Verfahren, und hinsichtlich einer (Hart-)Feinbearbeitung das Wälz- oder Profilschleifen, Honen und Hartschälen. Zudem gibt es diverse ergänzende Bearbeitungen der Verzahnungen wie das Entgraten und/oder Anfasen, die Einarbeitung weiterer Strukturen in Verzahnungen wie etwa Hinterlegungen oder Nuten, oder auch die Zahnendenbearbeitung in Form von Abrundungen oder dem Abdachen der Zähne.

Je nach Konfiguration gibt es Einzelmaschinen, die nur jeweils einen dieser Prozesse ausführen, jedoch über eine Werkstückautomation auch zu komplexeren Systemen gekoppelt sind, wie auch Stationen mit Mehrfachbearbeitungen, auf denen beispielsweise in einer Werkstückaufspannung Verzahnungen erzeugt, entgratet und/oder angefast werden, oder auch Kombinationen hiervon. Die Erfindung bewegt sich auf dem Gebiet, bei dem wenigstens zwei Bearbeitungen vorgesehen sind, von denen wenigstens eine die Verzahnungsbearbeitung in Form eines Bearbeitungseingriffs eines Verzahnungswerkzeugs mit der Werkstückverzahnung beinhaltet.

Im Gegensatz zu diversen vergleichsweise einfachen Spanungsprozessen wie dem Bohren oder Drehen ist der Bearbeitungseingriff eines Verzahnungswerkzeugs mit einer Werkzeug-Verzahnung eher komplex. Dies liegt zum einen an der hohen Zahl zu berücksichtigenden Verzahnungsparametern bereits für die grundlegenden Prozesse, die eine entsprechend angepasste Werkzeugauslegung erfordern. Zudem werden heutzutage Verzahnungen oftmals nicht in der klassisch reinen Form einer Evolvente hergestellt, sondern mit mehr oder weniger umfänglichen Zahnflankenmodifikationen, wie etwa Balligkeiten, Konizitäten oder Kombinationen davon, zum Teil unter zusätzlichen Randbedingungen wie der Vermeidung von Verschränkungen usw.

All dies führt dazu, dass moderne CNC-gesteuerte Verzahnungsmaschinen oder Verzahnungsbearbeitungssysteme durchaus komplexe Steuerungen für die Ablaufsteuerung der Bearbeitungen beinhalten. So müssen die jeweilig beteiligten Maschinenachsen sehr exakt CNC-gesteuert aufeinander abgestimmt werden, um auch die gewünschte Präzision trotz der auftretenden Bearbeitungskräfte zuverlässig zu erreichen. Bei größeren Werkstück-Chargen, die z.B. im Automobilbereich auftreten, wählt man für den gewünschten Prozess zunächst eine passende Werkzeugauslegung bei dazu passenden Prozessparametern der Achssteuerungen, überprüft und modifiziert diese gegebenenfalls, und die erforderlichen Maschinenachssteuerungen werden dann zu dem jeweiligen Projekt als Ablaufsteuerprogramm auf der Maschine hinterlegt. Anbieter von Steuerungssoftware, wie beispielsweise Siemens mit der Steuerungs-Software Sinumerik, stellen hierfür technische Hilfestellungen, wobei insbesondere größere Hersteller von Verzahnungsmaschinen oftmals eigene Steuerungssoftware entwickeln, die zwischen Bediener und der finalen Maschinenachssteuerung zwischengeschaltet ist. Dies bedeutet für den Bediener eine Bedienerleichterung insoweit, als dass er eine ggf. auf seine Bedürfnisse zugeschnittene vereinfachende Eingabemaske erhält, auf der er die relevanten Parameter des Prozesses eingeben kann, worauf die Maschine im Hintergrund die erforderlichen Steuerdaten dieser in Nicht-Maschinen-Echtzeit durchgeführten Vorbereitungshandlungen in Steueranweisungen überträgt, die später, sobald der Bediener in der Maschine das Ablaufprogramm in Gang setzt, der Maschine bzw. jeder Station eines Bearbeitungssystems nach Aus- und Anwahl des Prozesses die erforderlichen Steuervorgaben vorgibt, um alle der Maschine bzw. der Bearbeitungsstation zugeführten Werkstücke im Rahmen des ausgewählten Prozesses in Maschinen-Echtzeit gleichermaßen zu bearbeiten.

DE 10 2007 019558 A1 offenbart ein Verfahren gemäß dem Oberbegriff von Anspruch 1. Es werden Greifern interne Kennungen zugeordnet, welche von dem zuletzt am Werkstück durchgeführten Bearbeitungsschritt abhängen, die vier verschiedenen Zustände für die interne Kennung unbearbeitet ↔ 0; geschruppt ↔ A, geschruppt + rollgedrückt ↔ B sowie geschruppt + rollgedrückt + geschlichtet ↔ C. EP 2394 770 A1 lehrt das Wälzfräsen von Werkstücken mit von der Shiftpostion des Wälzfräsers abhängiger Bearbeitung. DE 10 2015 014313 A1 lehrt insbesondere für das Wälzstoßen eine Modifizierung von Sollwerten für die Drehwinkelposition zum Ausgleich von Profilwinkelabweichungen.

Der Erfindung liegt die Aufgabe zugrunde, Verfahren der eingangs genannten Art weitergehend zu verbessern, insbesondere hinsichtlich einer guten Kombination aus Bearbeitungsgenauigkeit mit möglichst wenig Ausschussteilen und erreichbaren Bearbeitungszeiten.

Diese Aufgabe wird von der Erfindung durch eine Weiterbildung des Verfahrens der eingangs genannten Art erreicht, das durch die Merkmale von Anspruch 1 gekennzeichnet ist.

Erfindungsgemäß erfolgt somit die Ablaufsteuerung nicht mehr durch innerhalb eines Prozesses einmalig vorgegebenen Steueranweisungen an die Bearbeitungsstationen, welche dann automatisch genau diese Steueranweisungen umsetzen, sondern anhand von Steuerinformationen, die jedem einzelnen zu bearbeitenden Werkstück zugeordnet hinterlegt sind. Die Hinterlegung kann unabhängig davon sein, welche gleichen oder ggf. anderen Werkstücke zuvor oder danach bearbeitet werden sollen. Das heißt, die Bearbeitungsstation spult nicht mehr automatisch die immer gleiche Bearbeitungssequenz ab, sondern prüft werkstückabhängig die jeweils zugeordnete Steuerinformation und führt somit nur diejenigen Bearbeitungen des Werkstücks durch, die von dem Werkstück im Maschinen-Echtzeit-System verlangt werden, also bei dem Werkstück anstehen (und an der Bearbeitungsstation natürlich verfügbar sein müssen). Die Überprüfung kann einen Abgleich der gemäß der Steuerinformation zu tätigenden Bearbeitungen mit der an der jeweiligen Station verfügbaren Bearbeitungen umfassen oder darin bestehen.

Mit der auf diese Weise eingeführten erhöhten Flexibilität ist es noch innerhalb der Maschinen-Echtzeit möglich, auf korrigierbare Einflüsse aufgrund äußerer Bedingungen oder vorgenommener Bearbeitungen zu reagieren und diese ggf. zu korrigieren, ohne dass vom Maschinen-Echtzeit-System zurück ins Nicht-Maschinen-Echtzeit-System gewechselt werden muss und dabei nutzbare Bearbeitungszeit verloren geht.

Systemtechnisch wird dementsprechend von der Erfindung bereitgestellt ein Bearbeitungssystem zum Bearbeiten von an Werkstücken vorgesehenen Verzahnungen mit den Merkmalen des Anspruchs 13.

Bei der zugeordnet hinterlegten Steuerinformation muss es sich nicht um eine Zusammenstellung aller finaler Steuerbefehle handeln, die dann an die Maschinenachsen gerichtet werden, es genügen Steueranweisungen, die den Bearbeitungsstationen die Ausführung der gewünschten Bearbeitungsabläufe im Wege einer eindeutigen Identifizierung der konkreten Steueranweisungen für die gewünschten Abläufe ermöglicht. In einem einfachsten Fall könnte man die hinterlegten Steueranweisungen daher als ein bloßes Abbild der in einem Nicht-Echtzeit-System berechneten Anweisungen ansehen, mit dem beispielsweise dann Steuerkanäle der finalen CNC-Maschinenachsendsteuerung beaufschlagt werden. Erfindungsgemäß ist jedoch ein Bearbeitungssystem vorgesehen, bei dem die zugeordnet hinterlegte Steuerinformation in Maschinen-Echtzeit noch änderbar ist, optional ist die zugeordnete Hinterlegung in Maschinen-Echtzeit mit Zusatzinformationen ergänzbar. Letztere Variante erlaubt es, u.a., Daten über die Prozessabläufe aufzunehmen und systematisch auswerten zu können. Soweit Änderungen die Steuerinformationen selbst betreffen, sind mehrere Untervarianten von denkbarem Vorteil.

So kann in der ersten erfindungsgemäßen Alternative die Änderung der zu einem Werkstück hinterlegten Steuerinformation in Abhängigkeit einer von einer Bearbeitungsstation bei der Bearbeitung dieses Werkstücks festgestellten Abweichung eines überwachten Maschinenparameters von seinem Sollwert erfolgen. Auf diese Weise kann noch innerhalb der Bearbeitung im Bearbeitungssystem auf potentielle Störungs- oder ungewünschte Abweichungsergebnisse reagiert werden, und auf diese Weise ggf. Ausschussteile oder unnütze Bearbeitungen und entsprechende Werkzeugabnutzung vermieden werden.

Andererseits kann in der anderen erfindungsgemäßen Alternative und auch zusätzlich vorgesehen sein, dass die Änderung auf Feststellung einer Abweichung eines Werkstückparameters gegenüber vorgegebenen Sollparametern durch eine als Messstation für das Werkstück funktionierende Station erfolgt. Dies bietet ebenfalls die Möglichkeit, eine Korrektur am Werkstück vorzunehmen, noch bevor das Werkstück die Bearbeitungsstationen wieder verlässt und ggf. zu einem späteren Zeitpunkt erst ausfindig gemacht und erneut zugeführt werden müsste. Neben diesen Änderungen der bereits hinterlegten Steuerinformation wird die Steuerinformation bereits beim Hinterlegen in Maschinen-Echtzeit angepasst, indem über die oben erläuterte Überwachung und Feststellung von Abweichungen im Falle von vergleichsweise einfachen Korrekturen in der einen erfindungsgemäßen Variante automatisch bei der Hinterlegung der Steuerinformation für nachfolgende Werkstücke berücksichtigt. Denkbar ist gerade bei größeren Abweichungen auch gemäß der anderen erfindungsgemäßen Variante ein Feedback-Control über das Nicht-Maschinen-Echtzeit-System, das dann über das Hinterlegen der Steuerinformation mit wenigstens "etwas Verspätung" mit verbesserter Genauigkeit im Maschinen-Echtzeit-System greifen kann.

Beispiele für derartige sich ändernde Einflüsse sind die Temperatur des Werkstücks durch die fortlaufende Bearbeitung, aber auch die Abnutzung des Werkzeuges, das zu entsprechenden Änderungen führen kann.

Es ist bevorzugt vorgesehen, dass eine ausgeführte Bearbeitung in der hinterlegten Steuerinformation (in Maschinen-Echtzeit) registriert wird. Dadurch können weitere Bearbeitungen, die in der Steuerinformation vorgesehen aber noch nicht freigeschaltet waren, freigeschaltet werden.

Besonders bevorzugt vorgesehen ist zudem eine Bewegungsvorrichtung, deren Betätigung eine die Anordnung der aktuell jeweiligen Bearbeitungsbereiche des Bearbeitungssystems an den jeweiligen Bearbeitungsstationen befindlichen Werkstücke definierende Besetzungskonfiguration ändert. Dazu kann eine Maschinenautomation mit mehreren Greifern und/oder Werkstückhalterungen eingesetzt werden, auch Einzelroboter mit hoher Anzahl von Beweglichkeiten wie Industrieroboter, z.B. KUKA Roboter, aber auch gekoppelte Systeme wie die Ringlager-Systeme mit 180° oder 90° Grundtaktung. Die Bewegungseinrichtung dient somit zum einen einem schnell durchführbaren automatischen maschinellen Ablauf der fortgesetzten Bearbeitungsprozesse beim Durchlauf mehrerer und insbesondere größerer Werkstücke und insbesondere größerer Werkstück-Chargen.

Zum anderen erlaubt diese auch eine in Abhängigkeit der denjenigen Werkstücken zugeordnet hinterlegten Steuerinformation in Maschinen-Echtzeit, die gerade im Bearbeitungsbereich des Bearbeitungssystems sind, durchgeführte Betätigung der Bewegungsvorrichtung, die gemäß einer Ausführungsform der Erfindung vorgesehen ist.

Das heißt, es gibt keine starre Zeittaktung mehr, sondern die Änderung der Besetzungskonfiguration erfolgt variabel dann, wenn der "langsamste" Prozess der beteiligten Stationen abgeschlossen ist, jedenfalls sofern ein gekoppeltes Transportsystem wie etwa ein Ringlager vorgesehen ist. Zum anderen kann speziell vorgesehen sein, dass eine Steuerung für die Betätigung der Bewegungsvorrichtung dazu ausgelegt ist, für mehrere nach der nächsten Betätigung der Bewegungsvorrichtung erreichbare Besetzungskonfigurationen die darin gemäß den den beteiligten Werkstücken zugeordneten Steuerinformationen dann möglichen Bearbeitungen untereinander zu vergleichen und nach vorbestimmten Kriterien eine Auswahl aus den Besetzungskonfigurationen zu treffen. Mit anderen Worten wird die Besetzungskonfiguration nicht automatisch bei jeder Änderung in gleicher Weise geändert, sondern die Änderung der Besetzungskonfiguration kann unterschiedlich ausfallen, je nachdem welche Auswahl von dem System getroffen wird. Das System "denkt" dabei vorausschauend und bestimmt, welche Änderung der Besetzungskonfiguration anschließend die insgesamt günstigste Bearbeitungssituation über alle beteiligten Werkstücke hinweg sein wird. Bei dieser Bestimmung kann auch mehrere Schritte vorausgedacht werden.

Als Auswahlkriterien sind diverse Kriterien vorgebbar, die untereinander auch gewichtet werden können, aber auch eine Self-Learning-Software denkbar, bei der das System in Testläufen mehrere Varianten durchprobiert und eigenständig die günstigste feststellt. Vorgebbare Auswahlkriterien könnten z.B. eine angestrebte Minimierung der zwischen der nächsten und übernächsten Betätigung der Bewegungsvorrichtung erforderliche Zeit beinhalten, aber auch z.B. eine stärkere Gewichtung einer Vorgabe, dass der über die Bearbeitungsstationen verteilte größte Bearbeitungsaufwand möglichst immer zwischen zwei Änderungen der Besetzungskonfiguration ausführbar ist. Ein weiteres Auswahlkriterium kann eine Berücksichtigung einer begrenzten Anzahl von Steuerkanälen für die finalen Steueranweisungen an die beteiligten CNC-gesteuerten Maschinenachsen des Bearbeitungssystems beinhalten. Je nach Gesamtaufbau der Steuerung im Einzelnen stehen, wenn z.B. auf kommerziell verfügbare Maschinensteuerungen wie die Sinumerik oder ähnliche zurückgegriffen wird, nur eine begrenzte Anzahl von Steuerkanälen zur Verfügung, deren optimale Ausnutzung somit ein mit zu berücksichtigendes Kriterium sein kann.

Grundsätzlich wäre es denkbar, dass jedes einzelne Werkstück die Steuerinformation physikalisch in auslesbarer Form trägt. Erfindungsgemäß ist jedoch vorgesehen, dass die Bewegungsvorrichtung eine Mehrzahl von Greifern und/oder Werkstückhalterungen aufweist, und die Zuordnung der zu einem Werkstück hinterlegten Steuerinformation über eine den dieses Werkstück greifenden Greifer/haltenden Halter zugewiesene Hinterlegungsstelle in einem Hinterlegungsraum realisiert ist. Auch in diesem Fall könnte der Hinterlegungsraum ein Datenspeicherraum sein, der physikalisch den Greifern zugewiesen sein könnte. Erfindungsgemäß handelt es sich bei dem Hinterlegungsraum jedoch um einen Speicher einer Steuerung des Bearbeitungssystems, und die Hinterlegungsstellen sind dann definierte, den jeweiligen Werkstücken zugeordnete Speicherplätze. Sie können etwa dem Greifer/Halter variabel, aber in jeder aktuellen Besetzungskonfiguration eindeutig zugeordnet sein, so dass jede Bearbeitungsstation, für die bekannt ist, welcher Greifer/Halter sie gerade mit dem Werkstück versorgt hat, entsprechend eindeutig auf die dem empfangenen Werkstück zugeordnete hinterlegte Steuerinformation zugreifen kann. Durch Implementierung über Zeiger (Pointer) zeigt z.B. ein einem Greifer zugewiesener Zeiger auf die passende Hinterlegungsstelle.

Die Bearbeitungsstation ist in der bislang erläuterten Betriebsart dazu gesteuert, die sich nach Prüfung der hinterlegten Steuerinformation als von dieser Station vornehmbare und freigeschaltete Bearbeitung erweisende Bearbeitung vorzunehmen. Vereinfacht gesprochen sieht die Bearbeitungsstation nach, nach welchen Bearbeitungen es dem Werkstück aktuell verlangt, und führt eine solche Bearbeitung durch, sofern sie dazu in der Lage ist, also über die nötigen Werkzeuge und Maschinenachsen verfügt.

Wenn an einer Bearbeitungsstation mehrere Bearbeitungen möglich sind, die jedoch sequentiell verschaltet sind und noch nicht gleichzeitig begonnen werden können, ist zudem vorgesehen, dass die Bearbeitungsstation auch noch nicht freigeschaltete, jedoch aufgrund einer Bearbeitung dieser Bearbeitung schon dann freigeschaltete Bearbeitungen ausführt. Ein Beispiel hierfür wäre das Entfernen axialer Grate nach einem Wälzfräsvorgang. Erst wenn der Wälzfräser sich axial entlang der Werkstückachse ausreichend weit vorbewegt hat, so dass der Grat ausgebildet ist bzw. keine Kollisionsgefahr mit einem beispielsweise als Entgratscheibe ausgeführten Gratwerkzeug mehr besteht, kommt dieses zum Einsatz (die Maschinensteuerung enthält ein entsprechendes Freigabesignal, das generiert wird, sobald das Wälzfräswerkzeug eine bestimmte Axialposition erreicht hat).

Die Hinterlegung der Steuerinformation zu einem Werkstück sollte spätestens jedenfalls dann vorliegen, wenn es zu einer Bearbeitungsstation gelangt, deren Bearbeitung ggf. vom Ergebnis einer vorangehenden Bearbeitung abhängig ist. Zeitlich betrachtet könnte die Hinterlegung auch zu einem sehr frühen Zeitpunkt vorgeplant erfolgen, insbesondere wenn ausreichend Speicherplatz vorhanden ist. In einer bevorzugten Gestaltung erfolgt die Hinterlegung der Steuerinformation zu einem jeweiligen Werkstück jedoch im Zuge von dessen Eintritt in den Bearbeitungsbereich des Bearbeitungssystems. Dann können aktualisierende Modifizierungen der Steuerinformation bei deren Hinterlegung gemäß dem aktuellen Zustand des Systems, insbesondere deren Werkzeuge und anderweitiger einflussnehmender Prozessgrößen so aktuell wie möglich erfolgen.

Wie bereits erläutert, kann die Hinterlegung durch Übertragung eines durch einen Benutzer im Nicht-Maschinen-Echtzeit-System anlegbaren Steueranweisungen für insbesondere eine (gleichbleibende) Werkstück-Charge erfolgen.

Die Hinterlegungsstellen sind, wie oben bereits erläutert, definiert zugeordnete Speicherbereiche, haben ausreichenden Speicherplatz, um die oben erläuterten Änderungen aufzunehmen, und bevorzugt auch noch separaten zusätzlichen Speicherplatz zur Aufnahme von ergänzenden Informationen betreffend die Herstellung dieses Werkstücks. Über letztere können zusätzliche, insbesondere vollständige Daten erstellt werden, die die Bearbeitungsprozesse des Verzahnungsbearbeitungssystems repräsentieren und deren Auswertung zu einer Optimierung der Prozessabläufe genutzt werden kann, wie auch, bei geeigneter Archivierung, eine Rückverfolgung des Werkstücks möglich machen, sofern dieses Werkstück beispielsweise später ausgefallen ist, um ggf. in der Herstellung des Werkstücks begründete Ausfallrisiken besser nachverfolgen zu können.

Ebenfalls wie bereits angesprochen werden bei der Hinterlegung der Steuerinformation aktualisierende Modifizierungen aufgenommen, die als Reaktion für festgestellte und ggf. auch für vorausschauend erkennbare Prozessbedingungen aufschaltbar sind und entsprechend aufgeschaltet werden. Diese können entweder unmittelbar aus dem Echtzeit-System durch Feedback von einzelnen Stationen gewonnen werden, aber auch (mit etwas zeitlicher Verzögerung) nach Neubewertung im Nicht-Maschinen-Echtzeit-System, das in die Feedback-Control eingeschlossen ist, aufgeschaltet werden.

Weitere Merkmale, Einzelheiten und Vorteile der Erfindung ergeben sich aus der nachfolgenden Beschreibung mit Bezug auf die beigefügten Figuren, von denen
Fig. 1a schematisch ein Bearbeitungssystem noch ohne bestückte Werkstücke in schematischer Darstellung zeigt,
Fig. 1b eine abstrakte Darstellung eines Hinterlegungsraums mit hinterlegten Steuerinformationen zeigt,
Fig. 2 eine Besetzungskonfiguration eines Bearbeitungssystems zeigt, und
Fig. 3 eine Sequenz von Besetzungskonfigurationen zeigt.

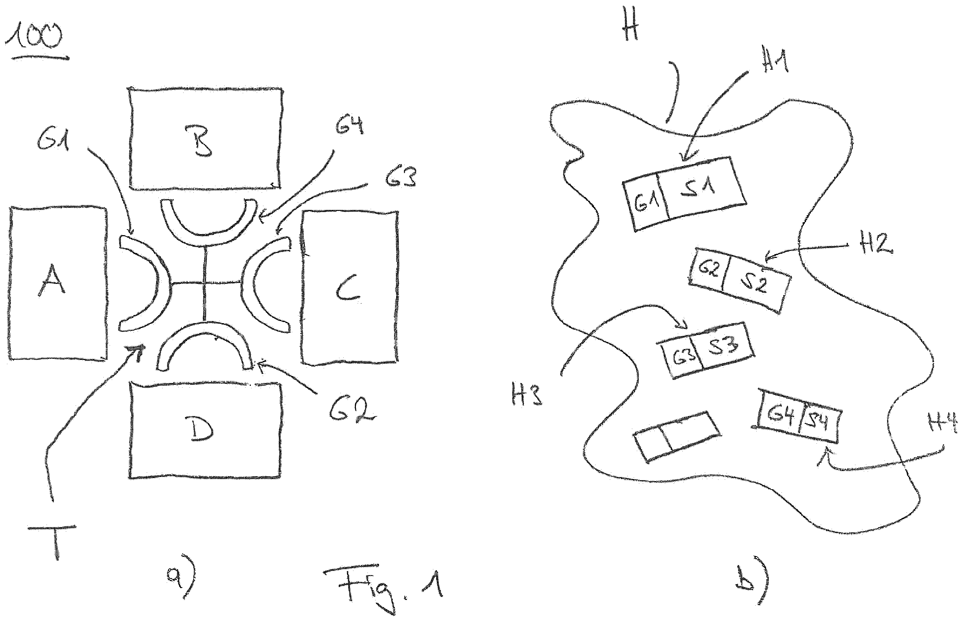

Das in Fig. 1 mit 100 bezeichnete Bearbeitungssystem hat in diesem Ausführungsbeispiel vier Stationen A, B, C und D, und ein Transportsystem T in Form eines Ringladers mit vier steif aneinander in 90° Orientierung gekoppelten Greifern G1, G2, G3 und G4. Dies ist jedoch nur beispielhaft, es könnten mehr oder weniger Stationen vorgesehen werden, und auch eine starre Kopplung der Greifer ist nicht zwingend, so könnten die Greifer auch unabhängig voneinander bewegbar sein. Bei dem konkreten Ausführungsbeispiel erleichtert es die Kopplung der Greifer, eine Steuerung zu implementieren, bei der zu jedem Zeitpunkt festgelegt und bekannt ist, welcher Greifer Gᵢ sich gerade an welcher der Stationen befindet.

Weiter ist bei dem konkreten Ausführungsbeispiel des Bearbeitungssystems 100 die Station C als eine Bearbeitungsstation ausgebildet, auf der die Bearbeitungsprozesse des Wälzfräsens und eine Nachbearbeitung in Form einer Entfernung der beim Wälzfräsen entstandenen axialen Grate stattfindet. Diese beiden Prozesse können zeitlich überlappen.

Die Station D ist als Anfasstation ausgebildet. Das heißt, an ihr werden in einer dem Fachmann grundsätzlich bekannten Art Fasen an den Zahnkanten der erzeugten Verzahnungen gebildet. Dies könnte beispielsweise durch drückende Verfahren wie das Wälzentgraten oder auch schneidende Verfahren bewirkt werden. An Station D könnte zusätzlich eine Messstation eingerichtet sein, um die Qualität der auf Station C gefrästen Verzahnungen zu überprüfen.

Station B ist in diesem Ausführungsbeispiel eine Freistation, an der keine tatsächliche Bearbeitung der Werkstücke stattfindet, sie könnte jedoch bei Bedarf zu vorbereitenden oder anderweitigen Bearbeitungen herangezogen werden. Zum Beispiel könnten auf Station B Werkstückrohlinge auf Übereinstimmung mit ihren Sollparametern geprüft werden.

In Station A werden Werkstücke bzw. Rohlinge über ein nicht dargestelltes externes Transportsystem, beispielsweise eine Werkstück-Automation zugeführt. Dort gelangen somit neue Werkstücke in den Bearbeitungsbereich des Bearbeitungssystems 100, und bearbeitete Werkstücke verlassen den Bearbeitungsbereich.

Bei dem konkreten Ausführungsbeispiel sind somit nur die Stationen C und D mit drehend antreibbaren, CNC-gesteuerten Werkstückspindeln ausgestattet, es können jedoch auch alle Stationen mit solchen Spindeln ausgestattet sein, je nach gewünschtem Einsatz des Bearbeitungssystems 100.

Es versteht sich, dass hinsichtlich der Art der durchzuführenden Verzahnungsbearbeitung auch andere Prozesse denkbar sind. So könnte eine Hauptbearbeitung zur Erzeugung von Verzahnungen auch durch Wälzstoßen oder Wälzschälen realisiert sein. Der Schwerpunkt könnte auch auf einer Feinbearbeitung liegen, in welchem Fall Verzahnungsschleifmaschinen wie eine Wälzschleifmaschine oder eine Profilschleifmaschine zum Einsatz kommen könnten, oder auch Honmaschinen. Es ist denkbar, dass an einer Station eine Verzahnung erzeugt wird und an derselben oder einer anderen Station noch Substrukturen in die Verzahnungen eingebracht werden, wie z.B. Hinterlegungen. Eine bevorzugte Variante stellt jedenfalls eine dar, bei der in wenigstens einer Station eine Verzahnung ausgehend von einem unverzahnten oder vorverzahnten Werkstück durch spanende Bearbeitung erzeugt wird, und wenigstens eine weitergehende Nachbearbeitung erfolgt, wie Entgraten und/oder Anfasen.

Anders als bei herkömmlichen Steuerungen, bei denen jede der Bearbeitungsstationen ein vor Aufnahme der Bearbeitung einer Werkstück-Charge fest vorgegebenes Ablaufprogramm erhält, das für jedes der Station zugeführte Werkstück abgearbeitet wird, ist für die Steuerung des Bearbeitungssystems 100 eine werkstückabhängige Steuerung vorgesehen. So ist jedem im Bearbeitungsbereich befindlichen Werkstück i (i=1, 2,...) eine Steuerinformation Sᵢ zugeordnet und das Werkstück bestimmt gewissermaßen selbst, welche Bearbeitungen an ihm vorzunehmen sind. Dies ist in diesem Ausführungsbeispiel konkret derart realisiert, dass ein Hinterlegungsraum H (Fig. 1B) vorgesehen ist, in dem mehrere Hinterlegungsstellen Hⱼ (j=1, 2,...) vorgesehen sind. Die Hinterlegungsstelle H1 ist dem Greifer G1 zugeordnet, der sich in Fig. 1A am Ort der Werkstückwechselstation A befindet. Im Zuge der Beladung des Greifers G1 des Transportsystems T mit einem Werkstück wird an der Hinterlegungsstelle H1 eine diesem Werkstück zugehörige Steuerinformation S1 eingespielt/abgespeichert. Die Einspielung der Steuerinformation S1 kann aus einer in einem Nicht-Echtzeit-System erstellten Steueranweisungen übertragen werden, beispielsweise in Form eines Abbildes davon. Es sind jedoch auch andere Varianten denkbar, oder auch zusätzliche Modifikationen der Steuerinformation S1 denkbar, die später beschrieben werden.

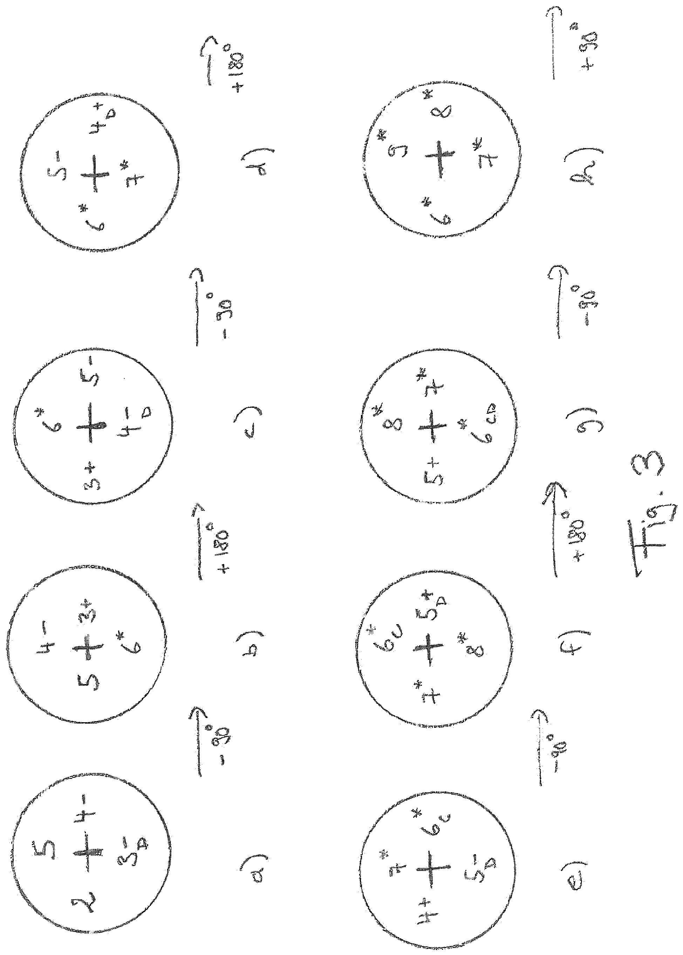

Wie weiter aus Fig. 1B oder Fig. 3 erkennbar ist, werden im Verlauf der weiteren Bearbeitung des Bearbeitungssystems mehrere Werkstücke gleichzeitig im Bearbeitungsbereich des Bearbeitungssystems 100 sein und in diesem Ausführungsbeispiel zirkulieren, jedoch nicht mehr als die Anzahl der Greifer, im vorliegenden Ausführungsbeispiel nicht mehr als vier. Entsprechend sind im Hinterlegungsraum H vier Hinterlegungsstellen H1, H2, H3 und H4 gebildet. Wie in Fig. 1B angedeutet, könnten noch weitere Hinterlegungsstellen vorgesehen sein. Wird beispielsweise die Hinterlegungsstelle H1 noch zur beispielsweise weitergehenden Auswertung der (wie später beschrieben auch im Verlaufe der Bearbeitung möglicherweise geänderten oder mit Zusatzinformationen versehenen) Steuerinformation S1 benötigt, kann eine andere Hinterlegungsstelle für das nächste (in diesem Ausführungsbeispiel im Zyklus dann das fünfte Werkstück) herangezogen werden. Die Kopplung der werkstückbezogenen Steuerinformation über den Greifer zur jeweiligen Hinterlegungsstelle bleibt jedoch erhalten.

Gelangt nun beispielsweise Greifer 1 mit dem von ihm gegriffenen/gehaltenen Werkstück zur Bearbeitungsstation C und übergibt das Werkstück an die Bearbeitungsstation C, ist diejenige Hinterlegungsstelle, die dem Greifer G1 zugeordnet ist, hier die Hinterlegungsstelle H1, zu prüfen und die Bearbeitungsstation C wird dann tätig, wenn sich aus den in H1 hinterlegten und überprüften Steuerinformationen, hier S1, ergibt, dass die an der Bearbeitungsstation C verfügbaren Bearbeitungsprozesse anzuwenden sind. Die Bearbeitungsstation C wird somit einen Werkstückrohling bearbeiten, also Wälzfräsen und Entgraten. Würde ein Werkstück, das die Bearbeitungsstation C bereits früher durchlaufen hat, erneut zur Bearbeitungsstation C verbracht, da es aus welchem Grund auch immer nicht fertig bearbeitet und deswegen den Bearbeitungsbereich nicht verlassen hat, wird dies erkannt und die Bearbeitungsstation C wird nicht tätig. Insbesondere da die Bearbeitungsstation C normalerweise davon ausgehen würde, in rotationssymmetrische unverzahnte Rohlinge zu schneiden, so dass es auf die relative Drehlage des Rohlings gegenüber dem Wälzfräser nicht ankommt, und auch nicht in jedem Fall eine Einmitt-Vorrichtung vorgesehen ist, wird für den soeben geschilderten Fall vermieden, dass bei der eigentlich nicht erforderlichen weiteren Bearbeitung durch die Bearbeitungsstation C die bereits erzeugte Verzahnung verschnitten oder vollständig zerstört wird.

Die Bearbeitungsstationen führen somit de facto werkstückgesteuert nur diejenigen Bearbeitungen aus, die konkret an genau diesem Werkstück vorgesehen sind, und spulen nicht automatisch repititiv ein vorgegebenes Bearbeitungsprogramm ab.

Auf diese Weise ist es u.a. auch möglich, dass unterschiedliche Werkstück-Chargen nicht sequentiell, sondern durcheinander in den Bearbeitungsbereich des Bearbeitungssystems 100 eingeführt werden, das System erlaubt auch eher chaotische Abläufe.

Das Transportsystem T wird erst dann wieder bewegt, wenn die an allen beteiligten Stationen durchgeführten Bearbeitungen abgeschlossen sind. Mit der nächsten Betätigung des Transportsystems T wird die Besetzungskonfiguration der an den Stationen befindlichen Werkstücke geändert. Hier ist nicht zwingend vorgegeben, dass sich das Transportsystem mit den Greifern G1 bis G4 bei jeder Besetzungskonfigurationsänderung immer um 90° ändern muss oder überhaupt nach einem vorgegebenen Muster. Vielmehr kann auch eine Änderung der Besetzungskonfiguration abhängig von den aktuell hinterlegten Steuerinformationen Sᵢ erfolgen. So ist die Steuerung des Verzahnungsbearbeitungssystems 100 in einem möglichen Ausführungsbeispiel dazu gesteuert, die potentiell nach der nächsten Bewegung des Transportsystems T erreichbaren Besetzungskonfiguration zu ermitteln und für jede mögliche Besetzungskonfiguration zu bestimmen, welche Bearbeitungen an welchen Werkstücken überhaupt möglich sind und aus dieser Bestimmung durch eine geeignete Bewertung oder Selbstlernprozesse die nächste Betätigung des Transportsystems T auszuwählen.

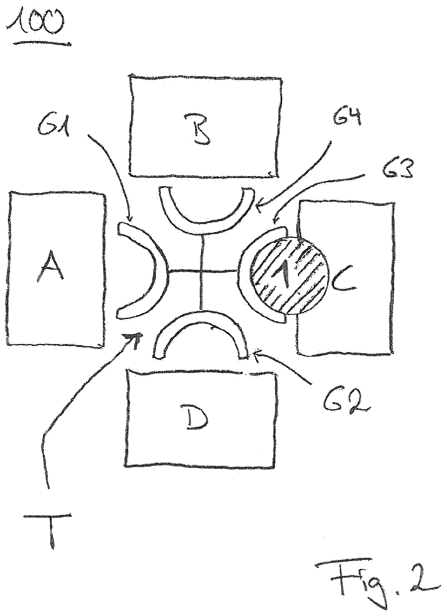

Ein Beispiel hierzu ist das Anfahren des Verzahnungsbearbeitungssystems 100 aus einer Ruhelage zur Bearbeitung einer Werkstück-Charge aus mehreren Werkstücken. Ausgehend von der in Fig. 1A gezeigten Situation gelangt als erstes der erste Werkstückrohling in den Greifer G1. Bei herkömmlicher, fest vorgegebener 90° Taktung würde als nächstes der Greifer G1 zur Leerstation B gelangen, und Greifer G2 an Station A einen weiteren Rohling aufnehmen können. Die Möglichkeit dieser Besetzungskonfigurationsänderung ist auch für das Ausführungsbeispiel gegeben, jedoch werden auch andere Besetzungskonfigurationsänderungen geprüft, wie etwa eine 180° Drehung, bei der Greifer G1 Station B überspringt und sofort bei Station C landet. Hier erkennt das System durch Vergleich, dass dann eine Bearbeitung des Werkstücks bereits im nächsten Zyklus an Bearbeitungsstation C möglich ist. Das System kann somit auch für eine Steuerung des Transportsystems T zum Erreichen der in Fig. 2 dargestellten Besetzungskonfiguration gesteuert werden.

Sofern der Betrieb der Bearbeitung des Verzahnungsbearbeitungssystems 100 für eine gleichbleibende Werkstück-Charge einen eingeschwungenen Zustand erreicht, also die maximal mögliche Anzahl von Werkstücken im Bearbeitungsbereich des Systems 100 vorhanden sind, und soweit keine Störung auftritt, wird das System den geplanten Ablauf durchführen und dazu in diesem Ausführungsbeispiel bei einer 90° Taktung bleiben. Insoweit bei der Hinterlegung der Steuerinformationen keine Modifizierungen auftreten und man in der gleichen Werkstück-Charge verbleibt, und auch ansonsten keine hinterlegten Steuerinformationen von den Bearbeitungsstationen überschrieben werden, könnte das Bearbeitungssystem 100 dann auch in einem Wiederholungs-Modus betrieben werden, bei dem ggf. auf eine einfachere Steuerung geschaltet wird, indem unter Verzicht auf Überprüfung der Steuerinformationen Sᵢ in den Hinterlegungsstellen Hⱼ routinemäßig die gleichen Bearbeitungsabläufe durchgeführt werden wie bei der vorangegangenen Besetzungskonfiguration.

An den Hinterlegungsstellen können zusätzlich zu der hinterlegten Steuerinformation Sᵢ diese beispielsweise von einer Bearbeitungsstation modifiziert oder durch ergänzende Informationen Eᵢ versehen werden. Dies wird nachfolgend an zwei weiteren Beispielen verdeutlicht:
In einer Ausführungsform ist beispielsweise an der Bearbeitungsstation C der Wälzfräsprozess überwacht, etwa durch Betrachtung der auftretenden Drehmomente, etwa über eine Überwachung der Ströme der Maschinenachsen. Wird aufgrund dieser Überwachung festgestellt, dass es zu einer Fehlfunktion bei der Bearbeitung/Erzeugung der Verzahnung gekommen ist, kann dies vom System an der Hinterlegungsstelle Hⱼ, beispielsweise in diesem Fall der Hinterlegungsstelle H4 durch Änderung der Steuerinformation vermerkt werden. Wenn ansonsten die nächste Bearbeitung gemäß Steuerinformation Sₖ das Anfasen gewesen wäre, wird diese Steuerinformation deaktiviert und in diesem Fall durch die Steuerinformation "aus dem Bearbeitungsbereich ausschleusen" ersetzt. Je nach konkreter Gestaltung des Verzahnungsbearbeitungssystems 100 können dann beispielsweise die folgenden Ereignisse eintreten. Entscheidet sich die Systemsteuerung für die nächste Besetzungskonfigurationsänderung zu einer 90° Drehung des Transportsystems T, gelangt der Greifer G4 zur Bearbeitungsstation D. Diese wird jedoch nach Prüfen der werkstückzugeordneten Steuerinformation nicht mehr tätig. Auf diese Weise wird unnötige Werkzeugbelastung eingespart.

Denkbar ist jedoch auch, dass bei der Steuerung des Transportsystems T die Entscheidung getroffen wird, das mittlerweile diesem Werkstück zugeordnete erkennbare "Ausschleusen" sofort auszuführen, so dass statt 90° um 180° getaktet wird.

Ein anderes Beispiel für eine Behandlung einer möglichen Störung ist, dass beispielsweise die Station C eine Unregelmäßigkeit, jedoch keine schwerwiegende Unregelmäßigkeit feststellt und die Steuerinformation durch Einfügen des Bearbeitungsablaufs "Messkontrolle" modifiziert. Gelangt dieses Werkstück nun zur Station D, die eine derartige Messung ausführen könnte, wird die Station nach Prüfung der Steuerinformation nicht sofort den ebenfalls von ihr ausführbaren Anfasprozess durchführen, sondern zuerst die Messüberprüfung. Führt diese zu keiner nennenswerten Abweichung, wird die Station D daraufhin auch das Anfasen der Werkstückverzahnung ausführen. Stellt sie allerdings fest, dass beispielsweise die Zahnlücke nicht breit genug gefräst ist (etwa durch eine stärker werdende Abnutzung des Wälzfräsers auf Station C, so kann Station D die Steuerinformation Sᵢ z.B. derart modifizieren, dass ein erneuter Wälzfräs-Durchgang Schlichten angeordnet wird, mit einer die erkannte Abweichung kompensierenden tieferen Fräserzustellung.

In diesem Fall wird das dem Greifer G4 zugeordnete Werkstück an der Werkstückwechselstation A nicht aus dem Bearbeitungsbereich des Verzahnungsbearbeitungssystems 100 entfernt, da die ansonsten erst nach erfolgreichem "Anfasen" freigeschaltete Ausschleusung nicht freigeschaltet ist. Im Gegensatz zu herkömmlichen Systemen, bei denen dieses Werkstück allein durch Erreichen der Werkstückwechselposition nunmehr ausgewechselt würde, bleibt es im Bearbeitungsbereich und wird im späteren Verlauf wieder die Bearbeitungsstation C erreichen, an der dann der korrigierende Schlichtschnitt durchgeführt wird. Auch so wird insgesamt Bearbeitungszeit eingespart.

In einem weitergehenden Ausführungsbeispiel kann diese Feststellung an Station D, insbesondere wenn sie auch beim darauffolgenden Werkstück den gleichen Abweichungsfehler registriert, zu einer entsprechenden Rückmeldung an die Gesamtsteuerung führen. Letztere hat nunmehr im Nicht-Maschinen-Echtzeit-System die Möglichkeit, aufgrund der erkennbaren Werkzeugabnutzung entweder nach vorgegebenen Kriterien zu dem Schluss zu gelangen, das Werkzeug ist auszutauschen und deswegen den Gesamtprozess zu beenden. Es könnte jedoch auch für diese Abweichung optimierte Maschinenachskonfigurationen neu ermitteln, und nach deren Erstellung die erstmalige Hinterlegung der Steuerinformationen Sᵢ entsprechend den neuen Einstellwerten modifiziert aufspielen. In diesem Fall wird das System weiter flexibel betrieben, und eine Beendigung des Prozesses ist nicht zwingend erforderlich.

Derartige Situationen werden nachfolgend nochmals anhand von der in Fig. 3 dargestellten Besetzungskonfigurationssequenz beschrieben. In Fig. 3 sind die Greifer nicht mehr dargestellt, sondern nur noch die zur gegenseitigen Unterscheidung mit Bezugszeichen gekennzeichneten, schematisch dargestellten Werkstücke.

In der in Fig. 3A dargestellten Situation, die ausgehend von einem eingeschwungenen Verfahren entstanden ist, ist für Werkstück 3 in Station D nach dem Anfasen durch Messung festgestellt worden, dass die Zahnlückenweite zu eng ist und deshalb ein erneuter Schlichtschritt erforderlich ist. Der gleiche Fehler entsteht parallel an Station C erneut, weshalb Werkstück 4 wie Werkstück 3 mit einem "Minus" bezeichnet ist. Dieser Fehler, an das System gemeldet, führt zur sofortigen Korrekturreaktion für alle neu in den Bearbeitungsbereich des Systems eingebrachten Werkstücke, so dass das anstelle des Werkstücks 2 neu eingebrachte Werkstück 6 bereits eine aktualisierte Steuerinformation bei deren Hinterlegung erhält, was durch einen "Stern" angezeigt ist.

Die nächste Drehstellung nach Fig. 3A ist die in Fig. 3B gezeigte, in der um 90° zurückgetaktet wurde, da auch die Steuerinformation des Werkstücks 3 noch in Station D in Folge der festgestellten Fehlzahnweite auf "erneutes Schlichten mit richtiger Zahnweite" umgeschrieben wurde. Dementsprechend wird nun in Station C der korrigierende Schlichtschnitt an Werkstück 3 durchgeführt, das Werkstück 5 in Station A wird nicht ausgewechselt, da noch nicht bearbeitet, und Station D arbeitet ebenfalls nicht, da das Anfasen nicht freigeschaltet ist.

Nun wird um 180° getaktet, da die dann erreichbare Gesamtbearbeitung jeglicher bei 90° Taktung gegenüber zeitlich deutlich vorteilhaft ist, so dass die in Fig. 3C dargestellte Situation erreicht ist. Werkstück 3 kann dort durch Werkstück 7 mit bereits modifizierten richtigen hinterlegten Steuerinformationen ausgetauscht werden, Werkstück 4 wird auf Station D angefast, aber nicht zum Ausschleusen freigegeben, sondern hinsichtlich seiner Steuerinformation an Station D wie vorher das Werkstück 3 auf "erforderlichen erneuten Schlichtschritt" überschrieben. Auf Station C wird dann Werkstück 5 wälzgefräst, jedoch immer noch mit fehlerhaftem Schlichtschnitt, da die Steuerinformation für Werkstück 5 noch nicht angepasst ist und sich die Bearbeitungsstation C genau nach der zu Werkstück 5 hinterlegten Steuerinformation richtet.

Nun wird durch eine 90° Zurücktaktung das Werkstück 4 zurück zur Station C verbracht, wo es den korrigierenden Schlichtschnitt erhält, während an den Stationen B und D nicht gearbeitet und das Werkstück 6 an Station A auch noch nicht ausgewechselt wird.

Als nächstes folgt, wie in Fig. 3E dargestellt ist, nach einer erneuten Verschwenkung um 180° ein Austausch des fertig bearbeiteten Werkstücks 4 in Station A, während Werkstück 5 auf Station D angefast wird und für einen korrigierenden Schlichtschnitt markiert wird. Auf Station C ist Werkstück 6 dagegen das erste Werkstück seit Auftreten des Fehlers, welches aufgrund einer entsprechend aktualisierten Steuerinformation bei Hinterlegung der Information nunmehr auf Station C sofort entsprechend den Sollparametern richtig wälzgefräst wird.

Infolgedessen wird nachfolgend (Fig. 3F) nach einer 90° Taktung rückwärts das letzte noch fehlerhaft wälzgefräste Werkstück 5 nochmals in die Station C verbracht, während an der Werkstückwechselposition A das Werkstück 7 noch nicht ausgetauscht wird und am noch nicht wälzgefrästen Werkstück 8 an Station D natürlich noch kein Anfasen erfolgt.

Nach wiederum einer 180° Taktung kann das vollständig bearbeitete Werkstück 5 an Station A ausgetauscht werden durch ein neues Werkstück 9, das bereits wälzgefräste Werkstück 6 wird in Station D angefast und Werkstück 7 in Station C wälzgefräst und entgratet (man erkennt erneut am Übergang Bild 3F zu Bild 3G, dass wiederum Zeit eingespart werden kann, da nicht an einer festen 90° Taktung festgehalten wird). Anschließend hat man den Vollbetrieb mit nunmehr für alle Werkstücke im Bearbeitungsbereich des Systems aktualisierter Steuerinformation wieder erreicht und die Bearbeitung kann in diesem Vollbetrieb fortgeführt werden (Fig. 3h). Auch hier erkennt man wieder, dass selbst bei bestmöglichen Steueralternativen aus dem Stand der Technik möglicherweise nach der Situation aus Fig. 3A idealerweise eine Echtzeit-Korrektur einer Universalsteuerung an Bearbeitungsstation C eingeführt worden wäre, und üblicher 90° Weitertaktung de facto ein Ausschuss in Form der Werkstücke 3 und 4 produziert worden wäre.

Wie bereits geäußert, erfolgt die Hinterlegung der Steuerinformation zu den einzelnen Werkstücken zu einem möglichst späten Zeitpunkt, idealerweise im Zuge des Eintritts eines Werkstücks in den Bearbeitungsbereich des Verzahnungsbearbeitungssystems 100. Wenn, wie in einem bevorzugten Ausführungsbeispiel vorgesehen, bei Hinterlegung der Steuerinformation Sₖ in die Hinterlegungsstellen Hⱼ aktualisierend modifiziert werden, ist die aktualisierende Modifizierung so präzise wie möglich. Diese mag beispielsweise in Form von geringfügigen Anpassungen an die herrschenden, z.B. Temperaturbedingungen erfolgen, oder an bekannte/vorausberechenbare Werkzeugabnutzungen.

Für die Implementierung der werkstückabhängigen Steuerung lassen sich geeignete Instrumente einsetzen, die für den Fachmann in der Steuerungstechnik als solche bekannt sind. So kann der Zugriff auf die Hinterlegungsstellen, bevorzugt definierte Speicherbereiche, über Zeiger (Pointer) erfolgen, die eigentliche Steuerbefehle für die Bearbeitungssequenzen über zugehörige Signale anzeigen, wenn Teilabschnitte fertiggestellt sind und weitere Bearbeitungen freigeschaltet werden können. Zu diesem Zweck können einige später freizuschaltenden Sequenzen Startbedingungen enthalten, deren Erfüllung durch diese vorgenannten Signale angezeigt wird. Bei simultanen Sequenzen gibt es entsprechend eine festgelegte Zuordnung der jeweiligen Startbedingungen zu den Sequenzen. Eine konkrete Implementierung dieser Vorgänge könnte durch ein dynamisches Abbilden der Signale auf globale Speicherbereiche, die von mehreren Steuerungskomponenten gelesen und beschrieben werden können, z.B. Dualport-Bits, erfolgen. Zu den Sequenzen können dann zugehörige Templates mit den initiierten Sequenzen hinterlegt werden.

Wie bereits erläutert, sind die Hinterlegungsstellen nach Stationsdurchlauf eines Werkstücks wieder für das nächste Werkstück vorzubereiten. Dies kann durch ein zentrales Rücksetzen der Signale erfolgen.

Soll die Arbeit des Bearbeitungssystems eingestellt werden, wird das Greifersystem an der Werkstückwechselposition A keine neuen Werkstücke mehr aufnehmen. Dennoch wird in den Hinterlegungsstellen noch eine Steuerinformation hinterlegt, aus der die nachfolgenden Bearbeitungsstationen jedoch lediglich entnehmen, dass sie nicht mehr tätig werden brauchen.

Die Erfindung ist nicht auf die gezeigten Ausführungsbeispiele eingeschränkt. Vielmehr können die einzelnen Merkmale der vorangehenden Beschreibung und der nachstehenden Ansprüche einzeln und in Kombination für die Verwirklichung der Erfindung in ihren verschiedenen Ausführungsformen wesentlich sein.

## Patentansprüche

1. Verfahren zum Bearbeiten von an Werkstücken (1-9) vorgesehenen Verzahnungen, bei dem mehrere Werkstücke wenigstens einer wenigstens zwei Bearbeitungen ausführenden Bearbeitungsstation (C) und/oder wenigstens zwei jeweils wenigstens eine Bearbeitung ausführenden Bearbeitungsstationen (C, D) zugeführt werden und dort wenigstens eine dieser Bearbeitungen in Form einer Erzeugung einer Verzahnung an dem Werkstück ausgehend von einem unverzahnten oder vorverzahnten Werkstück unter einem spanenden Bearbeitungseingriff eines Verzahnungswerkzeugs mit der erzeugten Verzahnung sowie die wenigstens eine weitere Bearbeitung in Form einer weitergehenden Nachbearbeitung durch Entgraten und/oder Anfasen in Maschinenechtzeit ausgeführt werden, wobei
eine Ablaufsteuerung der Bearbeitungen wenigstens zum Teil in Abhängigkeit einer jedem einzelnen zu bearbeitenden Werkstück zugeordnet hinterlegten und in Maschinen-Echtzeit überprüften Steuerinformation (Sᵢ) erfolgt, wobei die Zuordnung der zu einem jeweiligen Werkstück hinterlegten Steuerinformation (Sᵢ) über eine Hinterlegungsstelle in einem Hinterlegungsraum realisiert ist, es sich bei dem Hinterlegungsraum um einen Speicher einer Steuerung eines das Verfahren ausführenden Bearbeitungssystems handelt und bei den Hinterlegungsstellen um definierte, den jeweiligen Werkstücken zugeordnete Speicherplätze, und wobei die Hinterlegungsstelle eine einem das jeweilig zugeordnete Werkstück greifenden Greifer bzw. haltendem Halter einer eine Mehrzahl von Greifern (61, 62, 63, 64) und/oder Werkstückhalterungen aufweisenden, die Werkstücke bewegenden Bewegungsvorrichtung zugewiesene Hinterlegungsstelle ist,
**dadurch gekennzeichnet, dass**
als Reaktion auf festgestellte Prozessbedingungen aktualisierende Modifizierungen bei der Hinterlegung der Steuerinformation aufgeschaltet werden, unmittelbar aus dem Echtzeit-System durch Feedback von einzelnen Stationen gewonnen oder mit zeitlicher Verzögerung mittels Feedback-Control nach Neubewertung im in die Feedback-Control eingeschlossenen Nicht-Maschinen-Echtzeit-System,
wobei neben Änderungen in Maschinen-Echtzeit der bereits hinterlegten Steuerinformation, nämlich Änderungen erfolgend in Abhängigkeit einer von einer Bearbeitungsstation bei der Bearbeitung dieses Werkstücks festgestellten Abweichung eines überwachten Maschinenparameters von seinem Sollwert oder auf Feststellung einer Abweichung eines Werkstückparameters gegenüber vorgegebenen Sollparametern durch eine als Messstation für das Werkstück funktionierende Station,
eine korrektive Anpassung zu festgestellten Abweichungen auch bei der Hinterlegung der Steuerinformation für nachfolgende Werkstücke automatisch Berücksichtigung findet, in Maschinen-Echtzeit oder zeitverzögert über die Feedback-Control.

2. Verfahren nach Anspruch 1, bei dem die zugeordnete Hinterlegung in Maschinen-Echtzeit zudem mit Zusatzinformationen ergänzt wird.

3. Verfahren nach Anspruch 1 oder 2, bei dem durch Betätigung der Bewegungsvorrichtung (T) eine die Anordnung der aktuell jeweilig im Bearbeitungsbereich des Bearbeitungssystems an den jeweiligen Bearbeitungsstationen befindlichen Werkstücke definierende Besetzungskonfiguration geändert wird.

4. Verfahren nach Anspruch 3, bei dem die Betätigung der Bewegungsvorrichtung (T) in Abhängigkeit der denjenigen Werkstücken unabhängig zugeordnet hinterlegten Steuerinformationen in Maschinenechtzeit erfolgt, die gerade im Bearbeitungsbereich des Bearbeitungssystems sind.

5. Verfahren nach Anspruch 4, bei dem die Betätigung der Bewegungsvorrichtung dazu gesteuert wird, für mehrere nach der nächsten Betätigung der Bewegungsvorrichtung erreichbare Besetzungskonfigurationen die darin gemäß den den beteiligten Werkstücken zugeordneten Steuerinformationen dann möglichen Bearbeitungen untereinander zu vergleichen und nach vorbestimmten Kriterien eine Auswahl aus den Besetzungskonfigurationen zu treffen.

6. Verfahren nach Anspruch 5, bei dem diese Auswahl unter Berücksichtigung nicht nur der nächsten erreichbaren Besetzungskonfigurationen erfolgt, sondern auch denjenigen der übernächsten und bevorzugt nochmals weiteren.

7. Verfahren nach Anspruch 4 oder 5, bei der die vorbestimmten Auswahlkriterien die zwischen der nächsten und übernächsten Betätigung der Bewegungsvorrichtung erforderliche Zeit berücksichtigen und/oder eine Berücksichtigung einer begrenzten Anzahl von Steuerkanälen für die finalen Steueranweisungen an die beteiligten CNC-gesteuerten Maschinenachsen eines die Verzahnungsbearbeitung durchführenden Bearbeitungssystems beinhaltet.

8. Verfahren nach einem der Ansprüche 1 bis 7, bei dem eine Bearbeitungsstation gesteuert ist, die sich nach Prüfung der hinterlegten Steuerinformation (Sᵢ) als von dieser Station vornehmbare und freigeschaltete Bearbeitung erweisende Bearbeitung vorzunehmen.

9. Verfahren nach Anspruch 8, bei der eine Bearbeitungsstation dazu gesteuert ist, ursprünglich noch nicht freigeschaltete, jedoch aufgrund einer Bearbeitung dieser Bearbeitungsstation freigeschaltete Bearbeitungen auszuführen.

10. Verfahren nach einem der Ansprüche 1 bis 9, bei der die Hinterlegung der Steuerinformation (Sᵢ) zu einem Werkstück im Zuge von dessen Eintritt in den Bearbeitungsbereich eines die Verzahnungsbearbeitung durchführenden Bearbeitungssystems erfolgt.

11. Verfahren nach einem der Ansprüche 1 bis 10, bei der die Hinterlegung durch Übertragung eines durch einen Benutzer im Nicht-Maschinen-Echtzeitsystem anlegbaren Steueranweisungen für insbesondere eine Werkstück-Charge erfolgt.

12. Verfahren nach einem der Ansprüche 1 bis 11, bei dem auch Modifizierungen als Reaktion für vorausschauend erkennbare Prozessbedingungen aufgeschaltet werden.

13. Verzahnungsbearbeitungssystem (100) zum Bearbeiten von an Werkstücken (1-9) vorgesehenen Verzahnungen und ausgelegt zur Durchführung eines Verfahrens nach einem der vorhergehenden Ansprüche, mit wenigstens einer für die Durchführung von zwei Bearbeitungen ausgelegten Bearbeitungsstation (C) und/oder mit wenigstens zwei für die Durchführung je wenigstens einer Bearbeitung ausgelegten Bearbeitungsstationen (C, D), wobei wenigstens eine der Bearbeitungsstationen (C, D) für einen Bearbeitungseingriff eines Verzahnungswerkzeugs mit der Werkstückverzahnung und diese oder die andere Bearbeitungsstation (C; D) für eine Bearbeitung in Form einer weitergehenden Nachbearbeitung durch Entgraten und/oder Anfasen ausgelegt ist, mit einer eine Mehrzahl von Greifern (61, 62, 63, 64) und/oder Werkstückhalterungen aufweisenden, die Werkstücke bewegenden und zu den jeweiligen Bearbeitungsstationen verbringende Bewegungsvorrichtung und mit einem einen Speicher aufweisenden Steuersystem für die Steuerung des Verzahnungsbearbeitungssystems (100) sowie zur Ablaufsteuerung der Bearbeitungen,
wobei in wenigstens einer Betriebsart des Systems die Ablaufsteuerung wenigstens zum Teil in Abhängigkeit einer jedem einzelnen zu bearbeitenden Werkstück zugeordnet hinterlegten und in Maschinen-Echtzeit überprüften Steuerinformation (Sᵢ) erfolgt, wobei die Zuordnung der zu einem jeweiligen Werkstück hinterlegten Steuerinformation (Sᵢ) über eine Hinterlegungsstelle in einem Hinterlegungsraum realisiert ist, es sich bei dem Hinterlegungsraum um den Speicher des Steuersystems handelt und bei den Hinterlegungsstellen um definierte, den jeweiligen Werkstücken zugeordnete Speicherplätze, und wobei die Hinterlegungsstelle eine einem das jeweilig zugeordnete Werkstück greifenden Greifer bzw. haltendem Halter der Bewegungsvorrichtung zugewiesene Hinterlegungsstelle ist,
**dadurch gekennzeichnet,**
**dass** das Steuersystem das Verzahnungsbearbeitungssystem in wenigstens der einen Betriebsart zur Ausführung eines Verfahrens nach einem der vorhergehenden Ansprüche steuert und entsprechend so gesteuert ist, dass
als Reaktion auf festgestellte Prozessbedingungen aktualisierende Modifizierungen bei der Hinterlegung der Steuerinformation aufgeschaltet werden, unmittelbar aus dem EchtzeitSystem durch Feedback von einzelnen Stationen gewonnen oder mit zeitlicher Verzögerung mittels Feedback-Control nach Neubewertung im in die Feedback-Control eingeschlossenen Nicht-Maschinen-Echtzeit-System,
wobei neben Änderungen in Maschinen-Echtzeit der bereits hinterlegten Steuerinformation, nämlich Änderungen erfolgend in Abhängigkeit einer von einer Bearbeitungsstation bei der Bearbeitung dieses Werkstücks festgestellten Abweichung eines überwachten Maschinenparameters von seinem Sollwert oder auf Feststellung einer Abweichung eines Werkstückparameters gegenüber vorgegebenen Sollparametern durch eine als Messstation für das Werkstück funktionierende Station,
eine korrektive Anpassung zu festgestellten Abweichungen auch bei der Hinterlegung der Steuerinformation für nachfolgende Werkstücke automatisch berücksichtigt wird, in Maschinen-Echtzeit oder zeitverzögert über die Feedback-Control.

## Claims

1. A method for machining toothings provided on workpieces (1-9), wherein several workpieces are fed to at least one machining station (C) carrying out at least two machining operations and/or to at least two machining stations (C, D) each carrying out at least one machining operation, where one of these machining operations is carried out in order to produce a toothing on said workpiece from a non-toothed or pre-toothed workpiece, by a machining engagement with chip removal between a gear cutting tool and the produced toothing, and the at least one additional machining operation in order to effect post-machining by deburring and/or chamfering in machine real-time, wherein
a sequence control of the machining operations is carried out at least partly on the basis of stored control information (Sᵢ) which is assigned to each individual workpiece to be machined and which is monitored in machine real-time, said assignment of the stored control information (Sᵢ) in relation to a respective workpiece is carried out via a storage location in a storage space, said storage space consisting of a memory of a control device of a machining system executing the method, and said storage locations consisting of defined memory locations assigned to the respective workpieces, and wherein said storage location is a storage location assigned to a gripper gripping the respectively assigned workpiece or to a support carrying it, said gripper or support belonging to a workpiece moving device having a plurality of grippers (61, 62, 63, 64) and/or workpiece supports and used to move the workpieces,
**characterised in that**
in response to sensed process conditions, updating changes are implemented during storing of the control information, which are obtained directly from the real-time system by feedback from individual stations or with a delay by means of feedback control after re-evaluation in the non-machine real-time system included in the feedback control,
wherein, in addition to machine real-time changes of the already stored control information, namely changes made as a function of a deviation about a monitored machine parameter with respect to its target value, detected by a machining station during the machining of said workpiece or when a deviation about a workpiece parameter with respect to predetermined target parameters is detected by a station working as a measuring station for said workpiece, a corrective adjustment with respect to detected deviations is also taken into account automatically when storing the control information for the following workpieces, in machine real-time or with a delay by means of a feedback control.

2. The method according to claim 1, wherein the storing with attribution is further supplemented by additional information in machine real-time.

3. The method according to claim 1 or 2, wherein an allocation configuration defining the arrangement of the workpieces currently located in the machining area of the machining system at the respective machining stations is changed by actuation of the moving device (T).

4. The method according to claim 3, wherein the actuation of the moving device (T) is carried out in machine real-time according to the control information stored independently of the workpieces which are currently in the machining area of the machining system.

5. The method according to claim 4, wherein the actuation of the moving device is controlled to compare with each other, for several allocation configurations achievable after the next actuation of the moving device, the machining operations then possible in these configurations, according to the control information allocated to the workpieces concerned, and to make a selection from the allocation configurations according to predetermined criteria.

6. The method according to claim 5, wherein this selection is carried out taking into account not only the next feasible allocation configurations, but also those following the next and preferably even later ones.

7. The method according to claim 4 or 5, wherein the predetermined selection criteria take into account the time required between the next actuation of the moving device and the following one, and/or include a consideration of a limited number of control channels for the final control instructions regarding the implemented CNC machine axes of a machining system carrying out the machining operation.

8. The method according to one of claims 1 to 7, wherein a machining station is controlled to carry out the machining which, after verification of the stored control information (Sᵢ), proves to be a machining which is executable by this station and which has been validated.

9. The method according to claim 8, wherein a machining station is controlled to perform machining operations which were not initially validated but which became validated following machining at that machining station.

10. The method according to one of claims 1 to 9, wherein the control information (Sᵢ) relating to a workpiece is stored at the time of entering the machining area of a machining system carrying out the machining operation.

11. The method according to one of claims 1 to 10, wherein the storing is carried out by transmission of control instructions which can be created by a user in the non-machine real-time system, in particular for a batch of workpieces.

12. The method according to one of claims 1 to 11, wherein modifications are also implemented in response for predictable process conditions.

13. A machining system (100) for machining toothings provided on workpieces (1-9) and configured to execute a method according to one of the preceding claims, and comprising: at least one machining station (C) configured to carry out two machining operations and/or at least two machining stations (C, D) each configured to carry out at least one machining operation, wherein at least one of the machining stations (C, D) is configured for a machining engagement between a gear cutting tool and the toothing of the workpiece, and this machining station or the other machining station (C, D) is configured for a machining to effect post-machining by deburring and/or chamfering; a moving device which has a plurality of grippers (61, 62, 63, 64) and/or workpiece supports, which moves said workpieces and transports them to said respective machining stations; and a control system having a memory and used for controlling the machining system (100) and for the sequence controlling of the machining operations,
wherein, in at least one operating mode of the system, the sequence control of the machining operations is carried out at least partly on the basis of stored control information (Sᵢ) which is assigned to each individual workpiece to be machined and which is monitored in machine real-time, said assignment of the stored control information (Sᵢ) in relation to a respective workpiece is carried out by means of a storage location in a storage space, said storage space consisting of the memory of the control system and said storage locations consisting of defined memory locations assigned to the respective workpieces, and wherein said storage location is a storage location assigned to a gripper gripping the respectively assigned workpiece or to a support carrying it,
**characterised in that**
the control system controls the machining system in said at least one operating mode for executing a method according to one of the preceding claims and is controlled accordingly so that, in response to sensed process conditions, updating changes are implemented during storing of the control information, which are obtained directly from the real-time system by feedback from individual stations or with a delay by means of feedback control after re-evaluation in the non-machine real-time system included in the feedback control,
wherein, in addition to machine real-time changes of the already stored control information, namely changes made as a function of a deviation about a monitored machine parameter with respect to its target value, detected by a machining station during the machining of said workpiece or when a deviation about a workpiece parameter with respect to predetermined target parameters is detected by a station working as a measuring station for said workpiece, a corrective adjustment with respect to detected deviations is also taken into account automatically when storing the control information for the following workpieces, in machine real-time or with a delay by means of a feedback control.

## Revendications

1. Procédé d'usinage de dentures réalisées sur des pièces (1-9), dans lequel plusieurs pièces sont apportées à au moins un poste d'usinage (C) effectuant au moins deux opérations d'usinage et/ou à au moins deux postes d'usinage (C, D) effectuant chacun au moins une opération d'usinage, où sont effectuées une de ces opérations d'usinage, consistant en la production d'une denture sur ladite pièce à partir d'une pièce non dentée ou pré-dentée, par contact d'usinage avec enlèvement de matière entre un outil à tailler les dentures et la denture produite, ainsi que l'au moins une opération d'usinage supplémentaire consistant à effectuer un post-usinage par ébavurage et/ou chanfreinage en temps réel machine, étant entendu que
une commande du déroulement des opérations d'usinage est réalisée au moins en partie en fonction d'une information de commande (Sᵢ) stockée qui est attribuée à chaque pièce individuelle à usiner et qui est contrôlée en temps réel machine, ladite attribution de l'information de commande (Sᵢ) stockée en rapport avec une pièce respective est réalisée par le biais d'un emplacement de stockage dans un espace de stockage, ledit espace de stockage consistant en une mémoire d'un dispositif de commande d'un système d'usinage réalisant le procédé, et lesdits emplacements de stockage consistant en des places de mémoire définies attribuées aux pièces respectives, et ledit emplacement de stockage étant un emplacement de stockage affecté à une pince saisissant la pièce respectivement attribuée ou affecté à un support la portant, ladite pince ou ledit support appartenant à un dispositif de déplacement de pièces présentant une pluralité de pinces (61, 62, 63, 64) et/ou de supports porte-pièces et servant à déplacer les pièces,
**caractérisé en ce que**
en réaction à des conditions de processus détectées, des modifications d'actualisation sont mises en œuvre lors du stockage de l'information de commande, lesquelles sont obtenues directement à partir du système en temps réel par rétroaction des stations individuelles ou avec un retard au moyen d'une commande par rétroaction après réévaluation dans le système en temps réel non machine inclus dans la commande par rétroaction,
étant entendu que, en sus de modifications en temps réel machine de l'information de commande déjà stockée, à savoir des modifications effectuées en fonction d'un écart, concernant un paramètre machine surveillé par rapport à sa valeur cible, détecté par un poste d'usinage pendant l'usinage de ladite pièce ou lorsqu'il est détecté un écart concernant un paramètre de pièce par rapport à des paramètres cibles prédéterminés par un poste ayant fonction de poste de mesure pour ladite pièce, un ajustement correctif par rapport à des écarts détectés est également pris en compte automatiquement lors du stockage de l'information de commande pour les pièces suivantes, et ce en temps réel machine ou avec un retard par le biais d'une commande par rétroaction.

2. Procédé selon la revendication 1, dans lequel le stockage avec attribution est en outre complété par des informations supplémentaires en temps réel machine.

3. Procédé selon la revendication 1 ou 2, dans lequel une configuration d'occupation définissant la disposition des pièces actuellement situées dans la zone d'usinage du système d'usinage aux postes d'usinage respectifs est modifiée sous l'effet de l'actionnement du dispositif de déplacement (T).

4. Procédé selon la revendication 3, dans lequel l'actionnement du dispositif de déplacement (T) s'effectue en temps réel machine en fonction des informations de commande stockées indépendamment des pièces qui se trouvent actuellement dans la zone d'usinage du système d'usinage.

5. Procédé selon la revendication 4, dans lequel l'actionnement du dispositif de déplacement est commandé pour comparer entre elles, pour plusieurs configurations d'occupation réalisables après le prochain actionnement du dispositif de déplacement, les opérations d'usinage alors possibles dans ces configurations compte tenu des informations de commande attribuées aux pièces concernées, et pour effectuer une sélection parmi les configurations d'occupation selon des critères prédéterminés.

6. Procédé selon la revendication 5, dans lequel cette sélection est effectuée en tenant compte non seulement des prochaines configurations d'occupation réalisables, mais également de celles suivant les prochaines et de préférence encore bien ultérieures.

7. Procédé selon la revendication 4 ou 5, dans lequel les critères de sélection prédéterminés prennent en compte le temps nécessaire entre le prochain actionnement, et celui qui le suit, du dispositif de déplacement et/ou comprennent la prise en compte d'un nombre limité de canaux de commande pour les instructions de commande finales concernant les axes de machine à commande CNC mis en œuvre d'un système d'usinage effectuant l'usinage des dentures.

8. Procédé selon l'une des revendications 1 à 7, dans lequel un poste d'usinage est commandé pour effectuer l'usinage qui, après vérification de l'information de commande (Sᵢ) stockée, s'avère être un usinage réalisable par cette station et qui a été validé.

9. Procédé selon la revendication 8, dans lequel un poste d'usinage est commandé pour effectuer des opérations d'usinage qui n'étaient pas été initialement validées mais qui le sont devenues à la suite d'un usinage à ce poste d'usinage.

10. Procédé selon l'une des revendications 1 à 9, dans lequel l'information de commande (Sᵢ) relative à une pièce est stockée lors de son entrée dans la zone d'usinage d'un système d'usinage effectuant l'usinage des dentures.

11. Procédé selon l'une des revendications 1 à 10, dans lequel le stockage est effectué par transmission d'instructions de commande pouvant être créées par un utilisateur dans le système temps réel non machine, notamment relativement à un lot de pièces.

12. Procédé selon l'une des revendications 1 à 11, dans lequel des modifications sont également mises en œuvre en réaction pour des conditions de processus prévisibles.

13. Système d'usinage de dentures (100) permettant d'usiner des dentures réalisées sur des pièces (1-9) et conçu pour mettre en œuvre un procédé selon l'une des revendications précédentes, et comportant au moins un poste d'usinage (C) conçu pour effectuer deux opérations d'usinage et/ou au moins deux postes d'usinage (C, D) conçus pour effectuer chacun au moins une opération d'usinage, au moins un des postes d'usinage (C, D) étant conçu pour un contact d'usinage entre un outil de taillage de dentures et la denture de la pièce et ce poste ou l'autre poste d'usinage (C, D) étant conçu pour un usinage consistant en un post-usinage par ébavurage et/ou chanfreinage, un dispositif de déplacement qui présente une pluralité de pinces (61, 62, 63, 64) et/ou supports porte-pièces, qui déplace lesdites pièces et les transporte vers lesdits postes d'usinage respectifs, et un système de commande présentant une mémoire et destiné à la commande du système d'usinage de dentures (100) et à la commande du déroulement des opérations d'usinage,
étant entendu que, dans au moins un mode de fonctionnement du système, la commande du déroulement des opérations d'usinage est réalisée au moins en partie en fonction d'une information de commande (Sᵢ) stockée qui est attribuée à chaque pièce individuelle à usiner et qui est contrôlée en temps réel machine, ladite attribution de l'information de commande (Sᵢ) stockée en rapport avec une pièce respective est réalisée par le biais d'un emplacement de stockage dans un espace de stockage, ledit espace de stockage consistant en la mémoire du système de commande et lesdits emplacements de stockage consistant en des places de mémoire définies attribuées aux pièces respectives, et ledit emplacement de stockage étant un emplacement de stockage affecté à une pince saisissant la pièce respectivement attribuée ou affecté à un support la portant,
**caractérisé en ce que**
le système de commande effectue une commande du système d'usinage de dentures dans ledit au moins un mode de fonctionnement pour exécuter un procédé selon l'une des revendications précédentes et est commandé en conséquence de sorte que, en réaction à des conditions de processus détectées, des modifications d'actualisation sont mises en œuvre lors du stockage de l'information de commande, lesquelles sont obtenues directement à partir du système en temps réel par rétroaction des stations individuelles ou avec un retard au moyen d'une commande par rétroaction après réévaluation dans le système en temps réel non machine inclus dans la commande par rétroaction,
étant entendu que, en sus de modifications en temps réel machine de l'information de commande déjà stockée, à savoir des modifications effectuées en fonction d'un écart, concernant un paramètre machine surveillé par rapport à sa valeur cible, détecté par un poste d'usinage pendant l'usinage de ladite pièce ou lorsqu'il est détecté un écart concernant un paramètre de pièce par rapport à des paramètres cibles prédéterminés par un poste ayant fonction de poste de mesure pour ladite pièce, un ajustement correctif par rapport à des écarts détectés est également pris en compte automatiquement lors du stockage de l'information de commande pour les pièces suivantes, et ce en temps réel machine ou avec un retard par le biais d'une commande par rétroaction.
